# EUROPÄISCHE PATENTANMELDUNG

(11) **EP 3 258 519 A1**
(43) Veröffentlichungstag der Anmeldung: **20.12.2017**
(21) Anmeldenummer: 16174720.9
(22) Anmeldetag: 16.06.2016
(51) Int. Cl.: H01M 2/26, H01M 10/04

(54) **ELEKTROCHEMISCHE ZELLE MIT OPTIMIERTEM INNENWIDERSTAND**

(71) Anmelder: VARTA Microbattery GmbH, 73479 Ellwangen (DE)
(72) Erfinder: Ensling, David Dr., 73479 Ellwangen (DE); Fürst, Martin, 73492 Rainau-Schwabsberg (DE); Hadlik, Moritz, 73479 Neuler (DE); Pytlik, Edward, 73479 Ellwangen (DE); Senz, Stefan, 73485 Unterschneidheim (DE); Wagner, Horst, 73494 Rosenberg (DE)
(74) Vertreter: Patentanwaltskanzlei Cartagena

(57) **Zusammenfassung**

Eine elektrochemische Zelle umfasst einen bandförmigen Elektroden-Separator-Verbund der Sequenz Anode / Separator / Kathode, einen bandförmigen metallischen Anodenstromkollektor, der mit negativem Elektrodenaktivmaterial beladen ist und einen bandförmigen metallischen Kathodenstromkollektor, der mit positivem Elektrodenaktivmaterial beladen ist. Der Elektroden-Separator-Verbund liegt in Form eines Wickels oder Stapels mit zwei endständigen Stirnseiten vor. Die Anode und die Kathode sind innerhalb des Elektroden-Separator-Verbunds versetzt angeordnet, so dass ein Längsrand des Anodenstromkollektors aus einer der endständigen Stirnseiten und ein Längsrand des Kathodenstromkollektors aus der anderen der endständigen Stirnseiten austritt. Die Zelle weist eine Kontaktplatte auf, die auf einem der Längsränder aufliegt, so dass sich eine linienartige Kontaktzone ergibt. Die Kontaktplatte ist mit dem Längsrand entlang der linienartigen Kontaktzone durch Verschweißung verbunden.

## Beschreibung

Die nachfolgend beschriebene Erfindung betrifft eine elektrochemische Zelle mit einem band-förmigen Elektroden-Separator-Verbund der Sequenz Anode / Separator / Kathode, der in Form eines Wickels oder Stapels mit zwei endständigen Stirnseiten vorliegt.

Derartige Zellen sind grundsätzlich bereits bekannt, beispielsweise aus der DE 10 2009 060 800 A1. In dieser deutschen Patentanmeldung sind zylindrische Wickel aus Elektroden-Separator-Verbünden beschrieben, die in zylindrische Metallgehäuse eingesetzt werden. Zur elektrischen Kontaktierung der Elektroden werden Stromkollektoren eingesetzt, die mit Elektrodenaktivmaterialien beladen sind. Die Stromkollektoren sind jeweils mit einer Metallfolie verschweißt, die als separater Stromableiter fungiert und die Stromkollektoren elektrisch mit dem Gehäuse verbindet.

Die in der DE 10 2009 060 800 A1 beschriebene Vorgehensweise zur elektrischen Kontaktierung der Elektroden ist effizient und kostengünstig. In bestimmten Anwendungsfällen bietet sie aber Nachteile. Problematisch ist beispielsweise, dass die elektrische Anbindung der Elektroden über nur eine Stromableiterfolie erfolgt, die zudem meist an ein Ende des Wickels angeschweißt ist. Wenn von derart angebundenen Elektroden hohe Ströme in kurzer Zeit gespeichert oder abgegeben werden sollen, stößt die beschriebene Lösung sehr schnell an ihre Grenzen.

Der vorliegenden Erfindung lag die Aufgabe zugrunde, elektrochemische Zellen mit bandförmigem Elektroden-Separator-Verbund der Sequenz Anode / Separator / Kathode bereitzustellen, die sich gegenüber dem zitierten Stand der Technik durch eine verbesserte Strombelastbarkeit auszeichnen.

Diese Aufgabe wird gelöst durch die elektrochemische Zelle mit den Merkmalen des Anspruchs 1. Bevorzugte Ausführungsformen der erfindungsgemäßen Zelle sind in den abhängigen Ansprüchen 2 bis 9 angegeben. Der Wortlaut sämtlicher Ansprüche wird hiermit durch Bezugnahme zum Inhalt dervorliegenden Beschreibung gemacht.

Die erfindungsgemäße elektrochemische Zelle zeichnet sich stets durch die folgenden Merkmale aus:
- Sie umfasst einen bandförmigen Elektroden-Separator-Verbund der Sequenz Anode / Separator Kathode. In bevorzugten Ausführungsformen weist der Verbund die Sequenz Anode / Separator / Kathode / Separator / Anode oder Kathode/Separator/Anode/Separator /Kathode auf.
- Die Anode umfasst einen bandförmigen metallischen Anodenstromkollektor, der mit einem negativem Elektrodenaktivmaterial beladen ist, und die Kathode umfasst einen bandförmigen metallischen Kathodenstromkollektor, der mit einem positiven Elektrodenaktivmaterial beladen ist. Die Elektrodenaktivmaterialien dienen der Speicherung von Energie. Die Stromkollektoren dienen der elektrischen Kontaktierung der Elektroden sowie der thermischen und mechanischen Anbindung.
- Wie die eingangs erwähnten gattungsgemäßen Zellen liegt auch der Elektroden-Separator-Verbund einer erfindungsgemäßen Zelle in Form eines Wickels oder Stapels mit zwei endständigen Stirnseiten vor.

Bevorzugt handelt es sich bei der erfindungsgemäßen elektrochemischen Zelle um eine sekundäre Zelle, also eine wieder aufladbare Zelle. Als Elektrodenaktivmaterial kommen für die erfindungsgemäße Zelle daher vorzugsweise die Aktivmaterialien in Betracht, die in sekundären elektrochemischen Zellen zum Einsatz kommen können.

Besonders bevorzugt handelt es sich bei der elektrochemischen Zelle um eine Lithium-Ionen-Zelle. In diesem Fall ist das negative Elektrodenaktivmaterial beispielsweise Graphit und das positive Elektrodenaktivmaterial beispielsweise Lithiumkobaltoxid.

In einer weiteren bevorzugten Ausführungsform kann es sich bei der erfindungsgemäßen Zelle um eine Nickel-Metallhydrid-Zelle handeln, die auf der Seite der negativen Elektrode eine Wasserstoffspeicherlegierung aufweist und auf der Seite der positiven Elektrode Nickelhydroxid / Nickeloxyhydroxid.

Weiterhin können die Elektroden der erfindungsgemäße Zelle wie die Elektroden der in der WO 2016/005529 A1 und in der WO 2016/005528 A2 beschriebenen Systeme ausgebildet sein. In diesen Dokumenten sind Systeme beschrieben, bei denen die positive Elektrode auf Nickeloxyhydroxid / Nickelhydroxid basiert während die negative Elektrode eine Mischung aus Aktivkohle und einer Wasserstoffspeicherlegierungodereine Mischung aus Aktivkohle und Eisen in metallischer u nd/oderoxidierter Form enthält.

Besonders zeichnet sich die erfindungsgemäße Zelle dadurch aus, dass
- innerhalb des Elektroden-Separator-Verbunds die Anode und die Kathode versetzt zueinander angeordnet sind, so dass ein Längsrand des Anodenstromkollektors aus einer der endständigen Stirnseiten und ein Längsrand des Kathodenstromkollektors aus der anderen der endständigen Stirnseiten austritt,
- Die erfindungsgemäße Zelle eine Kontaktplatte aufweist, die auf einem der Längsränder aufliegt, so dass sich eine linienartige Kontaktzone ergibt, und
- Die Kontaktplatte mit dem Längsrand entlang dieser linienartigen Kontaktzone durch Verschweißung verbunden ist.

Bei der Herstellung von Elektroden-Separator-Verbünden wird üblicherweise darauf geachtet, dass Elektroden und Stromkollektoren derart miteinander kombiniert werden, dass es nicht zu einem einseitigen Überstehen entgegengesetzt gepolter Stromkollektoren kommt, da dies die Kurzschlussgefahr erhöhen kann. Bei der beschriebenen versetzten Anordnung ist die Kurzschlussgefahr jedoch minimiert, da die entgegengesetzt gepolten Stromkollektoren aus sich gegenüberliegenden Stirnseiten des Wickels oder des Stapels austreten.

Erfindungsgemäß macht man sich den aus der versetzten Anordnung resultierenden Überstand der Stromkollektoren zunutze, indem man sie mittels eines entsprechenden Stromableiters großflächig kontaktiert. Als Stromableiter kommt hierbei die erwähnte Kontaktplatte zum Einsatz.

Über die Kontaktplatte ist es möglich, einen Stromkollektor und damit auch eine dazugehörige bandförmige Elektrode über seine / ihre gesamte Länge elektrisch zu kontaktieren. Dies senkt den Innenwiderstand innerhalb der erfindungsgemäßen Zelle sehr deutlich. Die beschriebene Anordnung kann das Auftreten großer Ströme somit sehr viel besser abfangen als aus dem Stand der Technik bekannte Zellen. Mit minimiertem Innenwiderstand reduzieren sich thermische Verluste bei hohen Strömen. Zudem wird die Abfuhr thermischer Energie über die Pole begünstigt.

Die Kontaktplatte kann wiederum mit einem Pol der erfindungsgemäßen Zelle, beispielsweise einem Gehäusepol, verbunden sein.

Es gibt mehrere Möglichkeiten, wie die Kontaktplatte mit den Längsrand verbunden werden kann.

In bevorzugten Ausführungsformen ist die Kontaktplatte mit dem Längsrand entlang der linienartigen Kontaktzone über mindestens eine Schweißnaht oder über eine Vielzahl von Schweißpunkten verbunden. Besonders bevorzugt umfasst der Längsrand einen oder mehrere Abschnitte, die jeweils über ihre gesamte Länge über eine Schweißnaht durchgehend mit der Kontaktplatte verbunden sind.

In einer möglichen Weiterbildung erstrecken sich der / die mit der Kontaktplatte über ihre gesamte Länge durchgehend verbundenen Abschnitte über mindestens 25 %, bevorzugt über mindestens 50 %, besonders bevorzugt über mindestens 75 %, der Gesamtlänge des Längsrandes.

Ganz besonders bevorzugt ist der Längsrand über seine gesamte Länge durchgehend mit der Kontaktplatte verschweißt.

Es ist auch möglich, dass die Kontaktplatte mit dem Längsrand über eine Vielzahl von Schweiß-punkten verbunden ist. In diesem Fall ist es bevorzugt, dass die Schweißpunkte mindestens eine Linie bilden, insbesondere mindestens eine Gerade, welche die linienartige Kontaktzone kreuzt.

Besonders bevorzugt liegtder Elektroden-Separator-Verbund in Form eines spiralförmigen Wickels vor. Hieraus resultiert, dass die aus den endständigen Stirnseiten des Wickels austretenden Längsränder des Anodenstromkollektors und des Kathodenstromkollektors bevorzugt ebenfalls eine spiralförmige Geometrie aufweisen. Analoges gilt für die linienartige Kontaktzone, entlang der die Kontaktplatte mit dem Längsrand verschweißt ist.

Bei dem Anodenstromkollektor und/oder dem Kathodenstromkollektor handelt es sich in bevorzugten Ausführungsformen um einen Schaum, ein Gewebe, ein Netz, ein Gitter, ein Vlies, einen Filz oder eine Folie. Besonders bevorzugt handelt es sich bei dem Anodenstromkollektor und/oder dem Kathodenstromkollektor um einen Metallschaum.

In weiteren bevorzugten Ausführungsformen weisen der Anodenstromkollektor und/oder der Kathodenstromkollektor eine Dicke im Bereich von 4 µm bis 700 µm auf.

Dicken im Bereich von 4 µm bis 25 µm sind insbesondere dann bevorzugt, wenn es sich bei dem Anodenstromkollektor und/oder dem Kathodenstromkollektor um eine Metallfolie handelt, insbesondere eine Folie aus Nickel, Aluminium oder Kupfer.

Wenn es sich bei dem Anodenstromkollektor und/oder dem Kathodenstromkollektor um einen Schaum, ein Gewebe, ein Netz, ein Gitter, ein Vlies oder einen Filz handelt, so können die Dicken im Bereich von 30 µm bis 700 µm liegen.

Wenn es sich bei dem Anodenstromkollektor und/oder dem Kathodenstromkollektor um einen Schaum, ein Gewebe, ein Netz, ein Gitter, ein Vlies oder einen Filz handelt, so weisen bevorzugt auch die Anode und/oder die Kathode selbst Dicken im Bereich von 30 µm bis 700 µm auf.

Die Dickenverhältnisse zwischen Anode und Kathode ergeben sich häufig in Abhängigkeit der verwendeten Aktivmaterialien und derjeweiligen spezifischen Kapazität derAktivmaterialien. Für EDLC- (EDLC = electric double layer capacitor), Lithium-Ionen- und NiMH-basierte Systeme werden Dicken zwischen 50 und 300 µm bevorzugt. Asymmetrische Systeme wie Lithium-Ionen-Kondensatoren oder wässrige Ni(OH)₂-basierte Kondensatoren benötigen Aktivkohle-Elektroden mit bevorzugt 200 - 700 µm Dicke und dünne Redox-Gegenelektroden (Graphit, Ni(OH)₂, Lithium-Titanat, MnO₂, etc.) mit bevorzugt 30 - 200 µm Dicke.

DerAnodenstromkollektor und/oderder Kathodenstromkollektor bestehen bevorzugt aus Aluminium, Titan, Kupfer, Nickel, Edelstahl oder aus vernickeltem Stahl.

In einigen bevorzugten Ausführungsformen weist die erfindungsgemäße Zelle mindestens eines derfolgenden Merkmale auf:
- Die Kontaktplatte ist eine Metallplatte mit einer Dicke im Bereich von 200 µm bis 1000 um, bevorzugt 400 - 500µm.
- Die Kontaktplatte weist mindestens einen Schlitz und/oder mindestens eine Perforierung auf, um einer Verformung der Platte bei der Herstellung der Schweißverbindung entgegenzuwirken.
- Die Kontaktplatte besteht aus Aluminium, Titan, Nickel, Edelstahl oder vernickeltem Stahl.

In einer ersten, besonders bevorzugten Ausführungsform weist die erfindungsgemäße Zelle mindestens eines der folgenden Merkmale, insbesondere eine Kombination aus den folgenden Merkmalen, auf:
- Der Elektroden-Separator-Verbund liegt in Form eines spiralförmigen Wickels mit zwei endständigen Stirnseiten vor.
- Die aus den endständigen Stirnseiten des Wickels austretenden Längsränder des Anodenstromkollektors und des Kathodenstromkollektors weisen eine spiralförmige Geometrie auf.
- Die Zelle weist eine erste Kontaktplatte auf, die auf dem Längsrand des Anodenstromkollektors aufliegt, so dass sich eine linienartige erste Kontaktzone mit spiralförmiger Geometrie ergibt.
- Die Zelle weist eine zweite Kontaktplatte auf, die auf dem Längsrand des Kathodenstromkollektors aufliegt, so dass sich eine linienartige zweite Kontaktzone mit spiralförmiger Geometrie ergibt.
- Bei dem Anodenstromkollektor und dem Kathodenstromkollektor handelt es sich jeweils um einen Schaum.
- Der Längsrand des Anodenstromkollektors umfasst einen oder mehrere Abschnitte, die jeweils über ihre gesamte Länge über eine Schweißnaht entlang der Kontaktzone durchgehend mit der ersten Kontaktplatte verbunden sind.
- Der Längsrand des Kathodenstromkollektors umfasst einen oder mehrere Abschnitte, die jeweils über ihre gesamte Länge über eine Schweißnaht entlang der Kontaktzone durchgehend mit der zweiten Kontaktplatte verbunden sind.

In einerzweiten, besonders bevorzugten Ausführungsform weist die erfindungsgemäße Zelle mindestens eines der folgenden Merkmale, insbesondere eine Kombination aus den folgenden Merkmalen, auf:
- Der Elektroden-Separator-Verbund liegt in Form eines spiralförmigen Wickels mit zwei endständigen Stirnseiten vor.
- Die aus den endständigen Stirnseiten des Wickels austretenden Längsränder des Anodenstromkollektors und des Kathodenstromkollektors weisen eine spiralförmige Geometrie auf.
- Die Zelle weist eine erste Kontaktplatte auf, die auf dem Längsrand des Anodenstromkollektors aufliegt, so dass sich eine linienartige erste Kontaktzone mit spiralförmiger Geometrie ergibt.
- Die Zelle weist eine zweite Kontaktplatte auf, die auf dem Längsrand des Kathodenstromkollektors aufliegt, so dass sich eine linienartige zweite Kontaktzone mit spiralförmiger Geometrie ergibt.
- Bei dem Anodenstromkollektor und dem Kathodenstromkollektor handelt es sich jeweils um einen Metallschaum.
- Der Längsrand des Anodenstromkollektors ist über eine Vielzahl von Schweißpunkten entlang der Kontaktzone mit der ersten Kontaktplatte verbunden.
- Der Längsrand des Kathodenstromkollektors ist über eine Vielzahl von Schweißpunkten entlang der Kontaktzone mit der zweiten Kontaktplatte verbunden.
- Die Schweißpunkte bilden jeweils mindestens eine Linie, insbesondere mindestens eine Gerade, welche die linienartige erste und die linienartige zweite Kontaktzone kreuzen.

In besonders bevorzugten Ausführungsformen bestehen die erste Kontaktplatte und derAnodenstromkollektor beide aus dem gleichen Material. Dieses wird besonders bevorzugt aus der Gruppe mit Kupfer, Nickel, Titan, vernickeltem Stahl und Edelstahl gewählt.

Die zweite Kontaktplatte und der Kathodenstromkollektor bestehen besonders bevorzugt beide aus dem gleichen Material aus der Gruppe mit Aluminium, Nickel, Titan, vernickelter Stahl und Edelstahl.

Weitere Merkmale der Erfindung sowie aus der Erfindung resultierende Vorteile ergeben sich aus den Zeichnungen sowie aus der nachfolgenden Beschreibung der Zeichnungen. Die nachfolgend beschriebenen Ausführungsformen dienen lediglich zur Erläuterung und zum besseren Verständnis der Erfindung und sind in keiner Weise einschränkend zu verstehen.

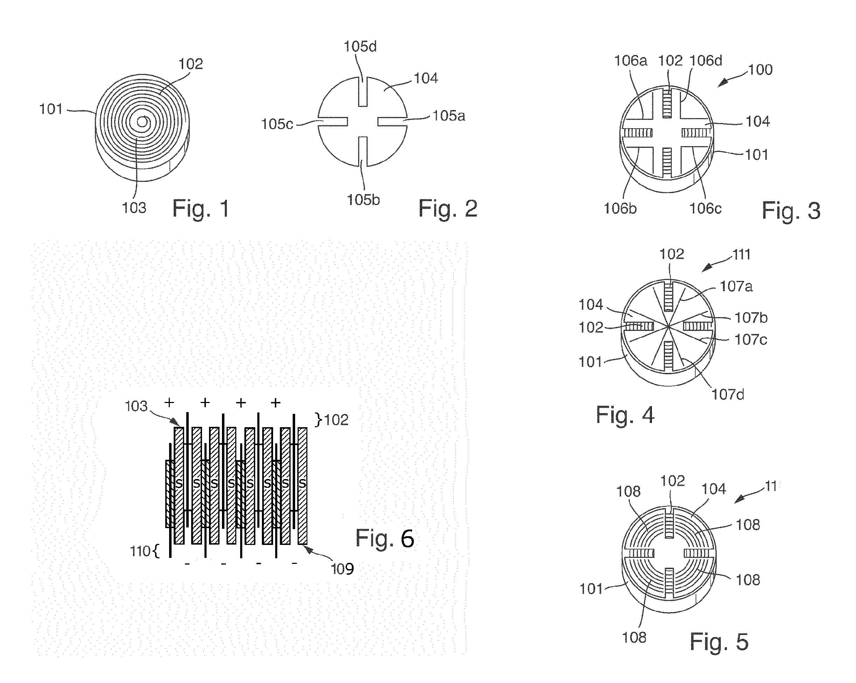

In Fig. 1 ist schematisch eine Ausführungsform eines spiralförmigen Wickels 101 dargestellt, dersich zu einer erfindungsgemäßen Zelle verarbeiten lässt. Der Wickel besteht aus einem Elektroden-Separator-Verbund und weist zwei endständige Stirnseiten auf, von denen nur eine, die Stirnseite 103, in Fig. 1 sichtbar ist.

Der Elektroden-Separator-Verbund weist eine Anode und eine Kathode auf, die innerhalb des Elektroden-Separator-Verbunds versetzt angeordnet sind. Die Anode umfasst einen bandförmigen metallischen Anodenstromkollektor, der mit negativem Elektrodenaktivmaterial beladen ist. Die Kathode umfasst einen bandförmigen metallischen Kathodenstromkollektor, der mit positivem Elektrodenaktivmaterial beladen ist. Bei beiden Stromkollektoren handelt es sich jeweils um einen porösen Metallschaum.

Ein Längsrand 102 des Kathodenstromkollektors tritt aus der Stirnseite 103 aus. Er weist eine spiralförmige Geometrie auf. Der Längsrand des Anodenstromkollektors tritt aus der nicht dargestellten weiten Stirnseite des Wickels 101 aus.

In Fig. 2 ist schematisch eine Ausführungsform einer Kontaktplatte 104 dargestellt, die sich zu einer erfindungsgemäßen Zelle verarbeiten lässt. Die Kontaktplatte 104 hat die Form einer flachen Scheibe und weist die weist Schlitze 105a, 105b, 105c und 105d auf. Durch diese Schlitze soll einer unbeabsichtigten Deformation der Kontaktplatte in Folge von Erwärmung, beispielsweise während eines Schweißvorgangs, entgegengewirkt werden.

In Fig. 3 ist schematisch eine erste Ausführungsform einer erfindungsgemäßen Zeile 100 dargestellt. Die Zelle setzt sich aus dem in Fig. 1 dargestellten spiralförmigen Wickel 101 und der in Fig. 2 dargestellten Kontaktplatte 104 zusammen. Die Kontaktplatte ist auf die Stirnseite 103 des Wickels aufgeschweißt. Zur Herstellung der Zelle 101 wird die Kontaktplatte 104 auf die Stirnseite 103 aufgelegt. Durch den Kontakt mit dem spiralförmigen Längsrand 102 ergibt sich eine linienartige Kontaktzone spiralförmiger Geometrie, über die der Längsrand 102 und die Kontaktplatte 104 verbunden sind.

Nach dem Auflegen wird die Kontaktplatte 104 auf dem Längsrand 102 fixiert. Hierzu werden mittels eines Laserstrahls die Kontaktplatte 104 und der Längsrand 102 entlang den Schweißlinien 106a, 106b, 106c und 106d miteinander verschweißt.

Die Schweißlinien 106a, 106b, 106c und 106d bilden Linien, die die linienartige Kontaktzone spiralförmiger Geometrie kreuzen. An jedem Kreuzungspunkt ist der Längsrand 102 mit der Kontaktplatte 104 durch Verschweißung verbunden. Insgesamt ergibt sich hierdurch eine großflächige Anbindung der Kontaktplatte 104 an den Längsrand 102.

In Fig. 4 ist schematisch eine zweite Ausführungsform einer erfindungsgemäßen Zelle 111 dargestellt. Die Zelle setzt sich gleichfalls aus dem in Fig. 1 dargestellten spiralförmigen Wickel 101 und der in Fig. 2 dargestellten Kontaktplatte 104 zusammen. Durch den Kontakt mit dem spiralförmigen Längsrand 102 ergibt sich auch hier eine linienartige Kontaktzone spiralförmiger Geometrie, über die der Längsrand 102 mit der Kontaktplatte 104 verbunden ist. Die Kontaktplatte ist auf die Stirnseite 103 des Wickels entlang den Schweißlinien 107a, 107b, 107c und 107d aufgeschweißt.

Die Schweißlinien 107a, 107b, 107c und 107d bilden hier Geraden, die die linienartige Kontaktzone spiralförmiger Geometrie kreuzen. An jedem Kreuzungspunkt der Geraden mit der linienartigen Kontaktzone ist der Längsrand 102 mit der Kontaktplatte 104 durch Verschweißung verbunden. Insgesamt ergibt sich hierdurch eine großflächige Anbindung der Kontaktplatte 104 an den Längsrand 102.

In Fig. 5 ist schematisch eine dritte Ausführungsform einer erfindungsgemäßen Zelle 112 dargestellt. Die Zelle setzt sich gleichfalls aus dem in Fig. 1 dargestellten spiralförmigen Wickel 101 und der in Fig. 2 dargestellten Kontaktplatte 104 zusammen. Durch den Kontakt mit dem spiralförmigen Längsrand 102 ergibt sich auch hier eine linienartige Kontaktzone spiralförmiger Geometrie, über die der Längsrand 102 mit der Kontaktplatte 104 verbunden ist. Die Kontaktplatte ist auf die Stirnseite 103 des Wickels entlang den Schweißlinien 108a, 108b, 108c und 108d aufgeschweißt.

Im Unterschied zur ersten und zur zweiten Ausführungsform bilden die Schweißlinien 108a, 108b, 108c und 108d keine Linien, die die linienartige Kontaktzone spiralförmiger Geometrie kreuzen. Stattdessen folgen die Schweißlinien der linienartigen Kontaktzone und fixieren somitden Längsrand 102 der Länge nach an die Kontaktplatte 104.

Aufgrund der Schlitze 105a bis 105d ist es nicht möglich, dass der Längsrand über seine gesamte Länge durchgehend mit der Kontaktplatte verschweißt ist. Stattdessen umfasst der Längsrand 102 - unterbrochen durch die Schlitze 105a bis 105d - eine Vielzahl von Abschnitten, die jeweils über ihre gesamte Länge über eine Schweißnaht entlang der Kontaktzone durchgehend mit der ersten Kontaktplatte verbunden sind.

In Fig. 6 sind schematisch einige Windungen des in Fig. 1 dargestellten Wickels im Querschnitt dargestellt. Zwischen den Separatoren "S" sind abwechselnd badförmige Kathoden "+" und bandförmige Anoden "-" angeordnet. Jede der Kathoden und jede der Anoden umfasst einen Stromkollektor. Aufgrund einer versetzten Anordnung der Kathoden und der Anoden innerhalb des Wickels tritt der Längsrand 102 des Kathodenstromkollektors aus der Stirnseite 103 aus während der Längsrand 110 des Anodenstromkollektors aus der Stirnseite 109 austritt.

## Patentansprüche

1. Elektrochemische Zelle mit den folgenden Merkmalen:
a. Die Zelle umfasst einen bandförmigen Elektroden-Separator-Verbund der Sequenz Anode / Separator / Kathode.
b. Die Anode umfasst einen bandförmigen metallischen Anodenstromkollektor, der mit negativem Elektrodenaktivmaterial beladen ist.
c. Die Kathode umfasst einen bandförmigen metallischen Kathodenstromkollektor, der mit positivem Elektrodenaktivmaterial beladen ist.
d. Der Elektroden-Separator-Verbund liegt in Form eines Wickels oder Stapels mit zwei endständigen Stirnseiten vor.
e. Die Anode und die Kathode sind innerhalb des Elektroden-Separator-Verbunds versetzt angeordnet, so dass ein Längsrand des Anodenstromkollektors aus einer der endständigen Stirnseiten und ein Längsrand des Kathodenstromkollektors aus der anderen der endständigen Stirnseiten austritt.
f. Die Zelle weist eine Kontaktplatte auf, die auf einem der Längsränder aufliegt, so dass sich eine linienartige Kontaktzone ergibt.
g. Die Kontaktplatte ist mit dem Längsrand entlang der linienartigen Kontaktzone durch Verschweißung verbunden.

2. Zelle nach Anspruch 1 mit mindestens einem der folgenden zusätzlichen Merkmale:
a. Die Kontaktplatte ist mit dem Längsrand entlang der linienartigen Kontaktzone über mindestens eine Schweißnaht oder über eine Vielzahl von Schweißpunkten verbunden.
b. Der Längsrand umfasst einen oder mehrere Abschnitte, die jeweils über ihre gesamte Länge über eine Schweißnaht durchgehend mit der Kontaktplatte verbunden sind.
c. Der oder die mit der Kontaktplatte über ihre gesamte Länge durchgehend verbundenen Abschnitte erstrecken sich über mindestens 25 %, bevorzugt über mindestens 50 %, besonders bevorzugt über mindestens 75 %, der Gesamtlänge des Längsrandes.
d. Der Längsrand ist über seine gesamte Länge durchgehend mit der Kontaktplatte verschweißt.

3. Zelle nach Anspruch 1 mit mindestens einem der folgenden zusätzlichen Merkmale:
a. Die Kontaktplatte ist mit dem Längsrand über eine Vielzahl von Schweißpunkten verbunden.
b. Die Schweißpunkte bilden mindestens eine Linie, insbesondere mindestens eine Gerade, welche die linienartige Kontaktzone kreuzt.

4. Zelle nach einem der vorhergehenden Ansprüche mit den folgenden zusätzlichen Merkmalen:
a. Der Elektroden-Separator-Verbund liegt in Form eines spiralförmigen Wickels vor.
b. Die aus den endständigen Stirnseiten des Wickels austretenden Längsränder des Anodenstromkollektors und des Kathodenstromkollektors weisen eine spiralförmige Geometrie auf.
c. Die linienartige Kontaktzone, entlang der die Kontaktplatte mit dem Längsrand verschweißt ist, weist eine spiralförmige Geometrie auf.

5. Zelle nach einem der vorhergehenden Ansprüche mit mindestens einem der folgenden zusätzlichen Merkmale:
a. Der Anodenstromkollektor und/oder der Kathodenstromkollektor ist ein Schaum, ein Gewebe, ein Netz, ein Gitter, ein Vlies oder ein Filz.
b. Der Anodenstromkollektor und/oder der Kathodenstromkollektor weist eine Dicke im Bereich von 3 µm bis 700 µm auf.
c. Der Anodenstromkollektor und/oder der Kathodenstromkollektor bestehen aus Aluminium, Titan, Kupfer, Nickel, Edelstahl oder vernickeltem Stahl.

6. Zelle nach einem der vorhergehenden Ansprüche mit mindestens einem der folgenden zusätzlichen Merkmale:
a. Die Kontaktplatte ist eine Metallplatte mit einer Dicke im Bereich von 200 µm bis 1000 µm.
b. Die Kontaktplatte weist mindestens einen Schlitz und/oder mindestens eine Perforierung auf, um einer Verformung der Platte bei der Herstellung der Schweißverbindung entgegenzuwirken.
c. Die Kontaktplatte besteht aus Aluminium, Titan, Kupfer, Nickel, Edelstahl oder vernickeltem Stahl.

7. Zelle nach einem der vorhergehenden Ansprüche mit mindestens einem der folgenden zusätzlichen Merkmale:
a. Der Elektroden-Separator-Verbund liegt in Form eines spiralförmigen Wickels mit zwei endständigen Stirnseiten vor.
b. Die aus den endständigen Stirnseiten des Wickels austretenden Längsränder des Anodenstromkollektors und des Kathodenstromkollektors weisen eine spiralförmige Geometrie auf.
c. Die Zelle weist eine erste Kontaktplatte auf, die auf dem Längsrand des Anodenstromkollektors aufliegt, so dass sich eine linienartige erste Kontaktzone mit spiralförmiger Geometrie ergibt.
d. Die Zelle weist eine zweite Kontaktplatte auf, die auf dem Längsrand des Kathodenstromkollektors aufliegt, so dass sich eine linienartige zweite Kontaktzone mit spiralförmiger Geometrie ergibt.
e. Bei dem Anodenstromkollektor und dem Kathodenstromkollektor handelt es sich jeweils um einen Schaum.
f. Der Längsrand des Anodenstromkollektors umfasst einen oder mehrere Abschnitte, die jeweils über ihre gesamte Länge über eine Schweißnahtentlangder Kontaktzone durchgehend mit der ersten Kontaktplatte verbunden sind.
g. Der Längsrand des Kathodenstromkollektors umfasst einen oder mehrere Abschnitte, diejeweils über ihre gesamte Länge über eine Schweißnahtentlangder Kontaktzone durchgehend mit der zweiten Kontaktplatte verbunden sind.

8. Zelle nach einem der vorhergehenden Ansprüche 1 bis 6 mit mindestens einem der folgenden zusätzlichen Merkmale:
a. Der Elektroden-Separator-Verbund liegt in Form eines spiralförmigen Wickels mit zwei endständigen Stirnseiten vor.
b. Die aus den endständigen Stirnseiten des Wickels austretenden Längsränder des Anodenstromkollektors und des Kathodenstromkollektors weisen eine spiralförmige Geometrie auf.
c. Die Zelle weist eine erste Kontaktplatte auf, die auf dem Längsrand des Anodenstromkollektors aufliegt, so dass sich eine linienartige erste Kontaktzone mit spiralförmiger Geometrie ergibt.
d. Die Zelle weist eine zweite Kontaktplatte auf, die auf dem Längsrand des Kathodenstromkollektors aufliegt, so dass sich eine linienartige zweite Kontaktzone mit spiralförmiger Geometrie ergibt.
e. Bei dem Anodenstromkollektor und dem Kathodenstromkollektor handelt es sich jeweils um einen Schaum.
f. Der Längsrand des Anodenstromkollektors ist über eine Vielzahl von Schweißpunkten entlang der Kontaktzone mit der ersten Kontaktplatte verbunden.
g. Der Längsrand des Kathodenstromkollektors ist über eine Vielzahl von Schweißpunkten entlang der Kontaktzone mit der zweiten Kontaktplatte verbunden.
h. Die Schweißpunkte bilden jeweils mindestens eine Linie, insbesondere mindestens eine Gerade, welche die linienartige erste und die linienartige zweite Kontaktzone kreuzen.

9. Zelle nach einem der Ansprüche 7 oder 8 mit mindestens einem der folgenden zusätzlichen Merkmale
a. Die erste Kontaktplatte und derAnodenstromkollektor bestehen beide aus dem gleichen Material aus der Gruppe mit Kupfer, Nickel, Titan, vernickelter Stahl und Edelstahl.
b. Die zweite Kontaktplatte und der Kathodenstromkollektor bestehen beide aus dem gleichen Material aus der Gruppe mit Aluminium, Nickel, Titan, vernickelter Stahl und Edelstahl.
